# EUROPÄISCHE PATENTANMELDUNG

(11) **EP 2 404 699 A2**
(43) Veröffentlichungstag der Anmeldung: **11.01.2012**
(21) Anmeldenummer: 11005024.2
(22) Anmeldetag: 21.06.2011
(51) Int. Cl.: B24B 1/00, B23K 10/00, B23K 15/00, B23K 26/00, B27N 3/00, B27N 7/00

(54) **Verfahren zum Polieren von Oberflächen und Vorrichtung zur Bekantung von plattenförmigen Erzeugnissen**

(30) Priorität: 06.07.2010 DE 102010026294
(71) Anmelder: IMA Klessmann GmbH, 32312 Lübbecke (DE)
(72) Erfinder: Seifert, Uwe, 32361 Preussisch Oldendorf (DE); Hollmer, Wilfried, 32369 Rahden (DE)
(74) Vertreter: Schober, Mirko

(57) **Zusammenfassung**

Beim Verfahren zum Polieren von Oberflächen (2b) von plattenförmigen Erzeugnissen, insbesondere von Oberflächen eines Kantenbandes (2) oder einer Dekorschicht von damit beschichteten Erzeugnissen aus Holz- oder Holzersatzwerkstoffen, wird ein eine Oberfläche (2b) aufweisendes plattenförmiges Erzeugnis bereit gestellt. Die Oberfläche (2b) wird anschließend zum Polieren mittels einer auf die Oberfläche (2b) gerichteten Wärmequelle, insbesondere einer Plasmaquelle (3, 4) bestrahlt, einer aus der Plasmaquelle (3, 4) erzeugten Flamme oder einer Laserstrahlungsquelle bestrahlt oder behandelt wird.

## Beschreibung

Die Erfindung betrifft ein Verfahren zum Polieren von Oberflächen nach dem Oberbegriff des Anspruchs 1 sowie eine Vorrichtung zum Bekanten von plattenförmigen Erzeugnissen nach dem Oberbegriff des Anspruchs 5.

Beim Polieren von Oberflächen, insbesondere denen von Kantenbändern, mit denen eine Platte aus Holz oder Holzersatzsoffen beschichtet ist, müssen in der Regel Poliermittel eingesetzt werden. Zum Auftrag solcher Mittel sind in der Regel separate Polieraggregate erforderlich, welche in der Anschaffung teuer sind. Oder das Werkstück muss aus einer Bekantungsmaschine entnommen und einer separaten Poliermaschine zugeführt werden. Dies ist aufwändig.

Der Erfindung liegt die Aufgabe zugrunde, ein Verfahren zum Polieren von Oberflächen anzugeben, welches die geschilderten Nachteile nicht aufweist und sich apparativ in bestehende Anlagen zur Bekantung von Werkstücken integrieren lässt.

Gelöst wird diese Aufgabe durch ein Verfahren mit den Merkmalen des Anspruchs 1 sowie eine Vorrichtung mit den Merkmalen des Anspruchs 5.

Erfindungsgemäß wird die Beschichtung des plattenförmigen Erzeugnisses auf der Oberfläche, die auf der dem Erzeugnis abgewandten Seite liegt, mit einer auf die Oberfläche gerichteten Wärmequelle, insbesondere einer Plasmaquelle oder Laserstrahlquelle, bestrahlt oder behandelt. Es hat sich überraschenderweise gezeigt, dass durch Bestrahlen mit einer solchen Wärmequelle bzw. durch Kontakt mit einer aus einer Plasmaquelle austretenden Flamme oder einem Laserstrahl die Oberfläche der Beschichtung einen deutlich sichtbaren Glanz erhält. Solche Wärmequellen wie Plasmaquellen oder Laserstrahlquellen eignen sich mithin für das Polieren von Oberflächen, wobei besonders gute Ergebnisse mit Kunststoffen wie z.B. Acryl erzielt werden. Die Oberfläche lässt sich durch den gezielten Einsatz von solchen Wärmequellen polieren, ohne dafür separate Poliermaschinen einsetzen zu müssen. Ferner besteht seit einiger Zeit die Möglichkeit, Beschichtungen mittels Plasma- oder Laserstrahlung auf die Erzeugnisse aufzubringen. Dazu wird vorteilhafterweise zum Aufbringen der Schicht oder Beschichtung diese auf ihrer dem zu beschichtenden Erzeugnis zugewandten Seite mit der Plasma- oder Laserquelle bestrahlt bzw. mit der aus der Plasmaquelle austretenden Flamme in Kontakt gebracht und dadurch mit dem Erzeugnis verbunden. Mit der vorliegenden Erfindung kann nun diese ohnehin vorhandene Wärmequelle auch zum Polieren in derselben Maschine eingesetzt werden, so dass sich ein überaus vorteilhafter Synergieeffekt ergibt. Als Beschichtung im Sinne der Erfindung können alle Schichten in Betracht kommen, bevorzugt Dekorschichten, Kaschierungen, Kantenbänder oder dergleichen.

Schließlich betrifft die Erfindung eine Vorrichtung zum Bekanten von plattenförmigen Erzeugnissen aus Holz-oder Holzersatzwerkstoffen. Bei dieser wird mit einer Bekantungseinheit ein Kantenband der Schmalseite eines Erzeugnisses unter Ausbildung eines Fügespaltes durch Relativbewegung von Erzeugnis und Kantenband zugeführt und mit dem Erzeugnis verbunden. Dabei drückt eine Andruckeinheit nach dem Zuführen des Kantenbandes an das Erzeugnis das Kantenband an die Schmalseite des Erzeugnisses an. Erfindungsgemäß ist dabei auch eine Poliereinheit mit einer Wärmequelle vorgesehen, die so angeordnet ist, dass sie die vom Erzeugnis abgewandte Oberfläche des mit dem Erzeugnis verbundenen Kantenbandes bestrahlt.

Die Erfindung wird nachfolgend anhand der Zeichenfiguren schematisch näher erläutert.
Figur 1 zeigt schematisch das erfindungsgemäße Verfahren in einer ersten Ausführungsform bei der Bearbeitung einer bereits bekanteten Platte.
Figur 2 zeigt schematisch das erfindungsgemäße Verfahren bei der Bearbeitung eines nicht bekanteten Vollmaterials.

Lediglich der Anschauung halber wird anstelle von Beschichtung im Ausführungsbeispiel von Kantenband gesprochen. Auch ohne Einschränkung der hier verwendeten Begriffe wird nachfolgend für ein beliebiges beschichtetes Erzeugnis der Begriff Platte verwendet.

Dargestellt ist ein Ausschnitt aus einer Platte 1, deren Schmalseite 1a mit einem Kantenband 2 in bekannter Weise durch Kleben, Lasern, Plasmabestrahlung beschichtet ist. Das Kantenband weist in der Zeichnung eine der Schmalseite 1a der Platte 1 abgewandte Oberfläche 2b auf. In der Ausschnittvergrößerung ist ein Bereich 2a des Kantenbandes mit dem zugehörigen Abschnitt der Platte 1 vergrößert dargestellt. Nach dem erfolgten Bekanten der Platte 1 wird die Oberfläche 2b des Kantenbandes 2 mittels einer Plasma- oder Laserquelle bearbeitet oder behandelt. Aus einer Düse 3 tritt ein Plasma- oder Laserstrahl oder eine Flamme 4 aus, welche(r) auf den zu behandelnden oder zu polierenden Bereich der Oberfläche 2b des Kantenbandes 2 gerichtet ist. Durch das Einwirken des Plasma- oder Laserstrahls bzw. der Plasmaflamme erhält die nach dem Aufbringen des Kantenbandes 2 auf die Platte 1 und der Finishbearbeitung matt aussehende Oberfläche 2b erkennbar ihren Glanz zurück, ohne dass separate Poliermaschinen eingesetzt werden müssen.

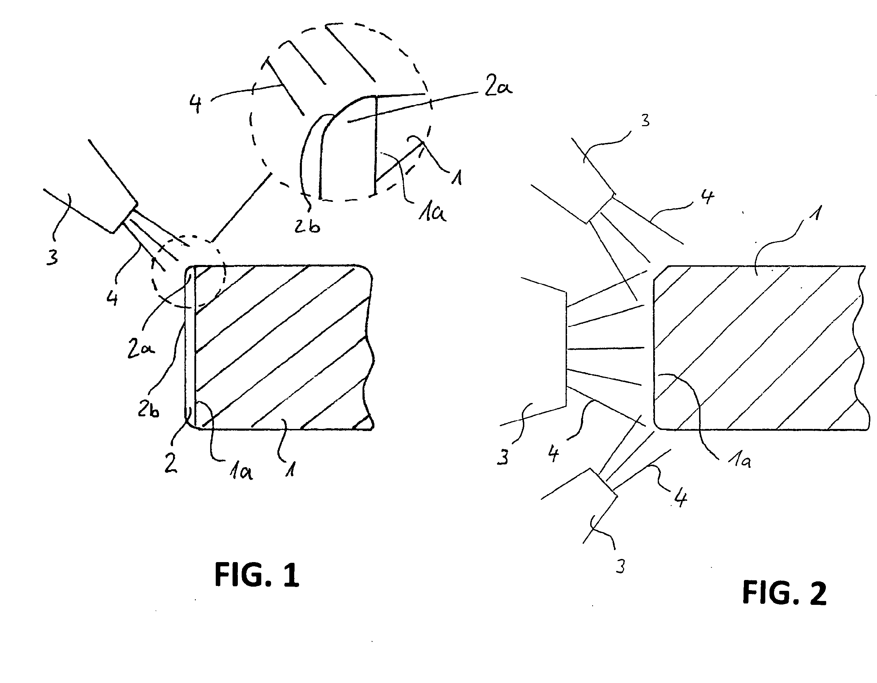

Das erfindungsgemäße Verfahren eignet sich ebenfalls, wie in Figur 2 gezeigt, für die Bearbeitung und das Polieren eines Vollmaterials 1. Anders ausgedrückt, die Oberfläche 2b muss nicht zwingend die eines Kantenbandes sein, sondern es kann auch die Oberfläche 1a der Platte 1 selbst bearbeitet werden, sofern hier ein geeignetes Material, insbesondere Kunststoff bzw. Acrylmaterial eingesetzt wird.

## Patentansprüche

1. Verfahren zum Polieren von Oberflächen (2b) von plattenförmigen Erzeugnissen, insbesondere von Oberflächen eines Kantenbandes (2) oder einer Dekorschicht von damit beschichteten Erzeugnissen aus Holz- oder Holzersatzwerkstoffen, wobei ein eine Oberfläche (2b) aufweisendes plattenförmiges Erzeugnis bereit gestellt wird und die Oberfläche (2b) anschließend zum Polieren mittels einer auf die Oberfläche (2b) gerichteten Wärmequelle, insbesondere einer Plasmaquelle (3, 4) bestrahlt, einer aus der Plasmaquelle (3, 4) erzeugten Flamme oder einer Laserstrahlungsquelle, bestrahlt oder behandelt wird.

2. Verfahren nach Anspruch 1,
**dadurch gekennzeichnet,**
**dass** als Oberfläche (2b) eine Kunststoffschicht, bevorzugt eine Schicht aus einem Acrylmaterial, eingesetzt wird.

3. Verfahren nach Anspruch 1 oder 2,
**dadurch gekennzeichnet,**
**dass** vor dem Bestrahlen mit der Wärmequelle zunächst eine Schicht mit der Oberfläche (2b) in Form eines Kantenbandes (2) oder einer Dekorschicht auf das Erzeugnis (1) aufgebracht wird.

4. Verfahren nach Anspruch 3,
**dadurch gekennzeichnet,**
**dass** zum Aufbringen der Schicht (2) diese auf ihrer dem zu beschichtenden Erzeugnis (1) zugewandten Seite mit einer Plasmaquelle (3, 4) bestrahlt oder mit einer aus der Plasmaquelle (3, 4) austretenden Flamme behandelt und dadurch mit dem Erzeugnis (1) verbunden wird.

5. Vorrichtung zum Bekanten von plattenförmigen Erzeugnissen aus Holz- oder Holzersatzwerkstoffen, mit einer Bekantungseinheit, die dazu ausgelegt ist, ein Kantenband (2) der Schmalseite eines Erzeugnisses (1) unter Ausbildung eines Fügespaltes durch Relativbewegung von Erzeugnis (1) und Kantenband (2) zuzuführen und mit dem Erzeugnis (1) zu verbinden, wobei eine Andruckeinheit vorgesehen ist, welche nach dem Zuführen des Kantenbandes (2) an das Erzeugnis (1) dieses an die Schmalseite desselben andrückt, **dadurch gekennzeichnet,**
**dass** eine Poliereinheit vorgesehen ist, welche eine gerichtete Wärmequelle, insbesondere Plasmaquelle (3, 4) oder Laserstrahlquelle, umfasst, die dazu ausgelegt ist, die vom Erzeugnis (1) abgewandte Oberfläche (2b) des mit dem Erzeugnis ( 1 ) verbundenen Kantenbandes (2) zu bestrahlen oder zu behandeln.

6. Poliervorrichtung zum Polieren von Oberflächen (1a, 2b) von plattenförmigen Erzeugnissen (1) oder Beschichtungen (2) derselben,
**dadurch gekennzeichnet,**
**dass** die Poliervorrichtung eine auf die zu polierende Oberfläche (1a, 2b) gerichtete Wärmequelle (3, 4) aufweist.

7. Poliervorrichtung nach Anspruch 6,
**dadurch gekennzeichnet,**
**dass** die Wärmequelle eine Plasma- oder Laserstrahlquelle oder eine aus einer Plasmaquelle erzeugte Flamme ist.
